# FASCICULE DE BREVET EUROPEEN

(11) **EP 1 164 487 B1**
(45) Date de publication et mention de la délivrance du brevet: **19.02.2003**
(21) Numéro de dépôt: 00480051.2
(22) Date de dépôt: 16.06.2000
(51) Int. Cl.: G06F 11/26

(54) **Dispositif de reproduction fonctionnelle d'un circuit intégré spécifique et son utilisation comme dispositif d'émulation**
Vorrichtung zur funktionellen Widergabe einer spezifischen integrierten Halbleiterschaltung und deren Verwendung als Emulationsvorrichtung
Device for the functional reproduction of a specific intergrated circuit and its usage as an emulation device

(43) Date de publication de la demande: 19.12.2001
(73) Titulaire: Europe Technologies S.A., 06560 Valbonne (FR)
(72) Inventeur: Noury, Sghaier, 06600 Antibed (FR); Bonhomme, Tristan, 06600 Antibes (FR); Jullien, Pascal, avenue de Provence 06140 Vence (FR)
(74) Mandataire: Bonneau, Gérard

(56) Documents cités:
- US-A- 5 339 262
- US-A- 5 572 665
- US-A- 5 710 934

## Description

### Domaine de la technique

La présente invention concerne de façon générale le prototypage, le développement et l'émulation des circuits intégrés spécifiques destinés à être incorporés dans des cartes d'application et concerne en particulier un dispositif de reproduction fonctionnelle d'un circuit intégré spécifique et son utilisation comme dispositif d'émulation lorsque le circuit intégré est incorporé dans une carte d'application.

### Etat de la technique

Pendant longtemps la technique des circuits intégrés à base de silicium qui a bénéficié d'une miniaturisation de plus en plus poussée, a été dominée par les circuits intégrés dits standards basés sur une unité de traitement centrale (CPU) ou un microprocesseur. Depuis quelques années la nouvelle tendance est aux circuits intégrés spécifiques (ASIC) à base de coeur de micro utilisant le jeu d'instructions étendu (CISC) ou le jeu d'instructions réduit (RISC). Mais qu'ils soient standards ou spécifiques, les circuits intégrés sont confrontés durant leur élaboration à trois problèmes : l'émulation qui consiste à remplacer dans l'application finale le circuit intégré ou la puce par un dispositif d'émulation effectuant les mêmes fonctions que le circuit intégré, le prototypage consistant à obtenir un prototype du futur circuit intégré et le développement consistant à tester aussi bien le matériel que le logiciel applicatifs et éventuellement déboguer en cas d'erreurs.

L'approche conventionnelle de l'émulation des circuits intégrés a souffert d'une hypothèse fondamentale qui est considérée encore aujourd'hui comme une vérité immuable. C'est qu'un circuit intégré ou une puce monolithique ne peut être émulée que par un autre circuit intégré, c'est à dire une autre puce monolithique qui contient au moins l'ensemble des fonctions contenues dans le circuit intégré à émuler. Les puces utilisées pour l'émulation contiennent généralement un ensemble de fonctions que l'on a rendu accessibles de l'extérieur par une extension des entrées/sorties de la puce. Ces puces permettent donc d'émuler tout circuit intégré ayant des fonctions qui constituent un sous-ensemble de l'ensemble de fonctions de la puce servant pour l'émulation. De telles puces qui constituent la base de l'émulation conventionnelle ont été appelées indifféremment SE chip, Bound out chip, DEV chip, Emulation chip, Super chip ou Piggy-Back.

Malheureusement, cette approche conventionnelle présente un inconvénient majeur. En effet, du fait que la puce d'émulation ne comporte qu'un ensemble donné de fonctions, elle ne peut servir à émuler qu'un nombre restreint de circuits intégrés. Par conséquent, la moindre modification du circuit intégré autre que la taille mémoire nécessitée par les besoins de l'application a des chances de nécessiter le développement d'une nouvelle puce d'émulation. Il est donc habituel d'attendre plus d'un an le développement d'un circuit d'émulation pour pouvoir procéder à l'émulation d'un circuit intégré résultant d'une modification d'un circuit intégré existant puisque l'exploitation d'un nouveau circuit intégré ne peut avoir lieu qu'après avoir validé son circuit d'émulation. Cette nécessité de développer quasiment à chaque fois un nouveau circuit d'émulation a rendu très difficile et très coûteux le développement des circuits intégrés qu'ils soient nouveaux ou qu'ils résultent de modifications de circuits intégrés existants. En plus, ce problème est devenu crucial avec l'augmentation continue des circuits intégrés spécifiques dans la mesure où il est devenu nécessaire de développer de nouveaux circuits d'émulation très rapidement pour répondre aux besoins croissants d'applications spécifiques et à l'évolution rapide des applications.

Pour résoudre le problème ci-dessus, il a été proposé d'adjoindre au circuit d'émulation un réseau logique programmable externe du type FPGA pour incorporer quelques fonctions supplémentaires. Cette solution ne peut pas convenir quand il faut créer un nouveau circuit intégré spécifique contenant plusieurs fonctions périphériques devant être émulées en temps réel attendu que l'accès à ces fonctions se fait par le bus externe et non par le bus interne et donc à une vitesse bien inférieure. En outre, une telle solution est totalement inopérante lorsque le circuit intégré nécessite d'y adjoindre des fonctions analogiques.

En ce qui concerne le prototypage et le développement d'un circuit intégré, les solutions existantes consistent à utiliser un ensemble de cartes éclatées représentant le circuit intégré à fabriquer ou à utiliser un circuit d'émulation mentionné précédemment auquel on adjoint un ou plusieurs réseaux programmables du type FPGA intégrant les fonctions requises. Ceci conduit à ne faire que des prototypes qui sont trop lents et ne représentent pas le circuit intégré en temps réel ou qui sont très proches du circuit d'émulation limitant ainsi les performances et les possibilités offertes par ces solutions en raison du nombre restreint des fonctions que l'on trouve traditionnellement dans un circuit d'émulation standard. Il est clair que la nécessité de développer de plus en plus des circuits intégrés spécifiques pour les nouvelles applications sans cesse plus nombreuses et leur complexité croissante ont créé un besoin crucial de disposer de dispositifs de prototypage et de développement rapides et efficaces.

### Exposé de l'invention

Le but principal de l'invention est donc de fournir un dispositif de reproduction fonctionnelle d'un circuit intégré spécifique destiné à être utilisé pour l'émulation du circuit intégré dans une application spécifique.

Un autre but de l'invention est également de fournir un dispositif de reproduction fonctionnelle d'un circuit intégré spécifique pouvant être utilisé comme dispositif de prototypage du circuit intégré.

Encore un autre but de l'invention est aussi de fournir un dispositif de reproduction fonctionnelle d'un circuit intégré spécifique pouvant être utilisé comme plate-forme de développement du circuit intégré.

L'objet de l'invention est ainsi un dispositif selon revendication 1.

### Description brève des dessins

Les buts, objets et autres avantages de l'invention apparaîtront clairement à la lecture de la description qui suit fait en référence aux dessins dans lesquels :
la figure 1 est un bloc-diagramme représentant le dispositif de reproduction fonctionnelle selon l'invention ainsi que les autres composants nécessaires pour le faire fonctionner comme dispositif d'émulation, de prototypage ou de développement,
la figure 2 représente un organigramme des étapes nécessaires pour la mise en oeuvre du dispositif de reproduction fonctionnelle selon l'invention aussi bien comme dispositif d'émulation, de prototypage ou de développement,
la figure 3 est un diagramme en fonction du temps des différentes phases mises en jeu pour la réalisation d'une carte d'application lorsque la technique classique est utilisée, et
la figure 4 est un diagramme en fonction du temps des différentes phases mises en jeu pour la réalisation d'une carte d'application lorsque le dispositif de reproduction fonctionnelle selon l'invention est utilisé.

### Description détaillée de l'invention

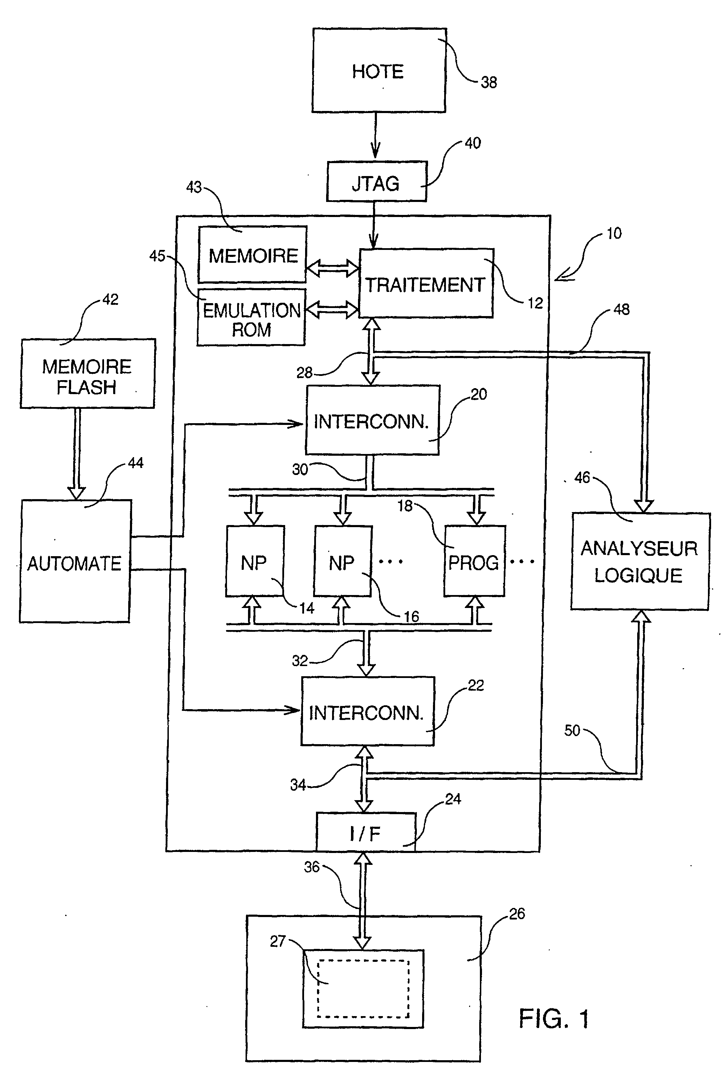

Comme illustré sur la figure 1, le dispositif de reproduction fonctionnelle 10 selon l'invention comprend principalement un module de traitement 12 connecté à des modules périphériques 14, 16 ou 18 au moyen d'un module d'interconnexion de fonctions 20, ainsi qu'un module d'interconnexion d'entrée/sortie 22 à la sortie des modules périphériques et une interface 24 qui permet la connexion du dispositif de reproduction fonctionnelle à une carte d'application 26.

Le module de traitement 12 est une unité de traitement classique (type CPU), généralement sous forme de puce de silicium, mais sans les fonctions qui font habituellement partie intégrante d'un circuit intégré. Toutes les liaisons internes qui sont normalement incorporées dans le circuit intégré font ici l'objet de connexions externes représentées globalement par le bus 28 appelé bus interne par la suite. En conséquence le module de traitement 12 occupe un place bien plus importante que la puce qui contiendra le circuit intégré spécifique qui est reproduit fonctionnellement attendu qu'il comporte beaucoup plus de connexions vers l'extérieur (environ 400) que la puce finale (environ 150).

Les modules périphériques sont des circuits intégrés contenant sur une même puce une pluralité de fonctions qui peuvent être implémentées dans un circuit intégré spécifique. Les modules sont divisés en deux catégories : des modules non programmables (NP) tels que les modules 14 ou 16 et des modules programmables (PROG) tels que le module 18. Les modules non programmables sont des circuits intégrant chacun plusieurs dizaines de fonctions numériques et/ou analogiques. Des fonctions numériques classiques sont par exemple : un générateur d'impulsions de temps ou un Timer, une fonction USART (Universal Synchronous Asynchronous Receiver Trasmitter), ou la fonction spécifique CAN qui est un protocole de communication dans l'industrie et l'automobile. Des fonctions analogiques classiques sont par exemple des convertisseurs analogique-numérique (ADC) ou numérique-analogique, des amplificateurs opérationnels ou des comparateurs analogiques. Le dispositif selon l'invention en comporte plusieurs de façon à prévoir toutes les fonctions possibles de façon à permettre au circuit intégré spécifique d'être adapté à l'application visée et d'évoluer avec les applications, attendu que l'on pourra reprogrammer à volonté le dispositif selon l'invention pour qu'il corresponde à une nouvelle application. Quant aux modules programmables, ce sont généralement des réseaux logiques programmables du type FPGA (Field Programmable Gate Array) qui permettent en les programmant de réaliser des fonctions numériques voulues.

Le module d'interconnexion de fonctions 20 est une matrice d'interconnexion pouvant être programmée de manière à connecter au moyen du premier bus de liaison 30, les lignes du bus interne 28 à certaines fonctions d'au moins un des modules périphériques 14, 16 et 18 correspondant aux fonctions qui seront incorporées dans le circuit intégré final.

Le module d'interconnexion d'entrée/sortie 22 est également une matrice d'interconnexion programmée de la même façon que le module d'interconnexion de fonctions pour connecter les sorties des fonctions sélectionnées dans les modules périphériques au moyen d'un second bus de liaison 32, au bus de sortie 34. Le bus de sortie 34 peut être connecté à la carte d'application par une nappe 36 et un circuit d'interface 24. En fait, la nappe 36 est connectée aux connexions de sortie du circuit intégré 27 qui n'a pas encore été incorporé sur la carte 26 (il est représenté en pointillés sur la figure). Ceci permet au dispositif 10 de servir de dispositif d'émulation lorsque la nappe 36 est connectée à la carte 26.

Le dispositif de reproduction fonctionnelle 10 est connecté à un ordinateur hôte 38 par une interface série du type JTAG 40 qui permet de télécharger du code de l'ordinateur vers le module de traitement, ceci dans le but principalement d'effectuer les tests et le débogage au niveau du logiciel.

Pour chaque circuit intégré spécifique à émuler, le dispositif de reproduction fonctionnelle doit être configuré pour reproduire identiquement les fonctions du circuit intégré. Pour cela, on élabore un programme en HDL (Hardware Description Language) établi selon les fonctions à sélectionner. Le code obtenu fourni par l'ordinateur hôte 38 est emmagasiné dans une mémoire du type Flash 42. Puis, en se servant du code mémorisé, un automate programmable 44 effectue la conversion parallèle série du code et procède à la programmation de la configuration en activant les connexions appropriées dans le module d'interconnexion 20 d'abord puis ensuite dans le module d'interconnexion 22.

Le dispositif de reproduction fonctionnelle 10 comprend également un module mémoire 43 et un module d'émulation ROM 45, tous deux connectés au module de traitement 12. Le module mémoire sert à emmagasiner le logiciel qui sera utilisé pour l'application et qui est transmis au module de traitement 12.

Le module d'émulation ROM 45 sert à pallier le problème résultant du fait qu'il est difficile d'utiliser le module mémoire 43 pour émuler la ROM du circuit intégré étant donné que le temps d'accès n'est pas le même et la largeur du bus mémoire (16 bits) est différente de la largeur de 32 bits utilisée en interne. En conséquence, le module 45 est une mémoire SSRAM ayant le même type d'accès que la ROM (32 bits et adresse fixe) avec le même temps d'accès (1 cycle en lecture). Un signal permet d'initialiser (boot) sur le module 45, ce qui permet de reproduire les conditions de fonctionnement exactes de la future ROM et donc de valider l'intégralité du logiciel avant de l'inscrire définitivement dans le silicium, d'où une diminution des risques dans la création du circuit intégré spécifique avec ROM.

Enfin, un analyseur logique 46 peut être connecté au bus interne 28 par un premier bus extérieur 48 et au bus de sortie 34 par un second bus extérieur 50. L'analyseur logique 46 sert pendant les phases de test à tester le bon fonctionnement du dispositif de reproduction fonctionnelle 10 ainsi que celui de la carte 26 ceci aussi bien en ce qui concerne le matériel qu'en ce qui concerne le logiciel.

Les connexions de l'analyseur logique avec le dispositif de reproduction fonctionnelle 10 permettent de corréler tous les signaux qui sortent normalement du circuit intégré. En outre, l'architecture éclatée du dispositif 10 permet de surveiller également des signaux internes au circuit sur le bus interne 28 et donc de voir toutes les interactions en temps réel entre le code, le module d'interconnexion d'entrée/sortie 22 et de très nombreux signaux internes tels que les interruptions des modules, le bus périphérique, etc.

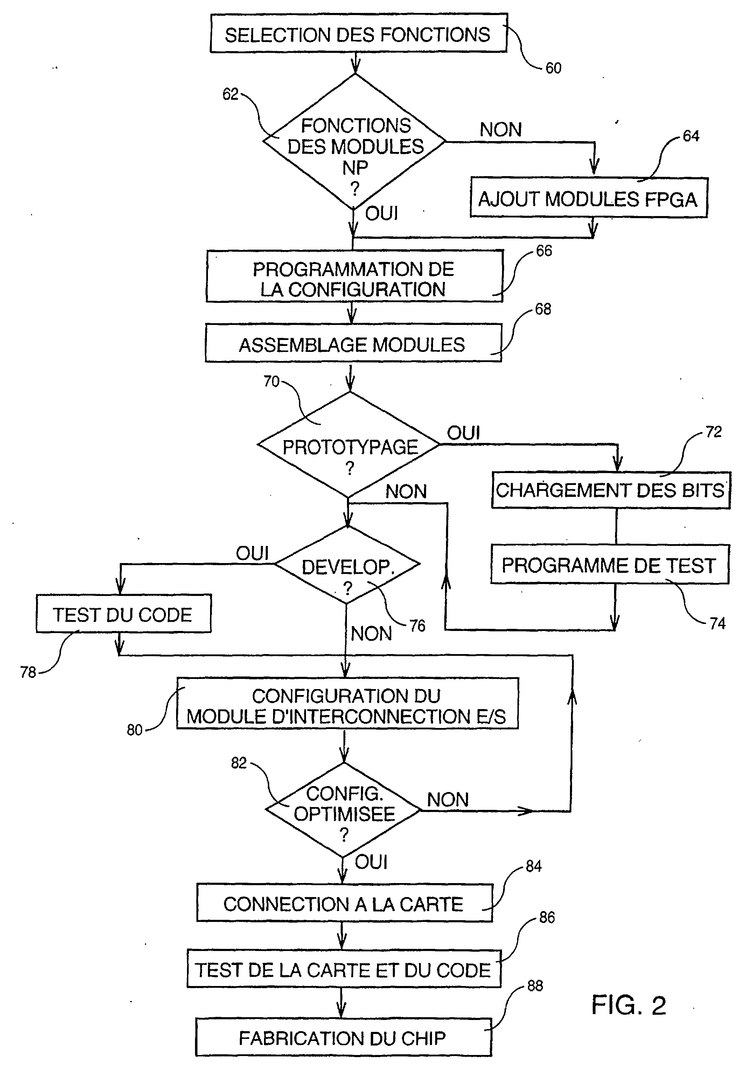

La mise en oeuvre du dispositif de reproduction fonctionnelle selon l'invention dont les différentes étapes sont représentées par l'organigramme de la figure 2, commence par la définition et la sélection des fonctions (60) devant être incorporées dans le circuit intégré spécifique à réaliser. Cette sélection est effectuée en sélectionnant les modules périphériques non programmables contenant les fonctions voulues. La question se pose alors de savoir si ces fonctions se trouvent toutes dans les modules MP (62). Si ce n'est pas le cas, il faut ajouter les fonctions numériques manquantes en programmant un ou plusieurs modules FPGA (64). Cette programmation se fait généralement au moyen d'un automate qui programme les fonctions du module FPGA à sa mise sous tension grâce à du code qui a préalablement été développé dans une station de travail.

Lorsque les fonctions ont été sélectionnées l'étape suivante consiste a établir la programmation en langage HDL (66) qui va permettre d'obtenir la configuration voulue résultant de la sélection précédente des fonctions. Le code obtenu est emmagasiné dans la mémoire flash 42. Ce code est utilisé pour effectuer l'assemblage des modules du dispositif de reproduction fonctionnelle en étant exécuté par l'automate 44 qui procède à la configuration du module d'interconnexion de fonctions (68).

L'étape suivante consiste à déterminer si on désire se servir du dispositif comme dispositif de prototypage (70) pour obtenir un prototype circuit intégré spécifique. Si c'est le cas, on effectue le chargement des bits dans le module de traitement 12 au moyen de l'ordinateur hôte 38 (72) et on effectue un programme de test approprié (74).

L'étape suivante consiste à déterminer si on désire se servir du dispositif de l'invention comme plate-forme de développement (76). Si c'est le cas on procède au test d'au moins une partie du code qui sera utilisé dans l'application (78). En effet, le dispositif de reproduction fonctionnelle selon l'invention qui dispose de sa propre horloge (non montrée), de sa propre mémoire 43 et de ses propres fonctionnalités 14, 16, 18, est donc autonome. Il permet donc de tester la bonne exécution des algorithmes du logiciel d'application et la modification de sa PLL permet une évaluation en temps réel des performances des algorithmes. En outre, certaines fonctions mises en oeuvre sont connectées sur des sorties standard et peuvent donc être stimulées par des appareils extérieurs tels que des terminaux et autres interfaces de communication. En outre, on a la possibilité de les visualiser sur l'écran de l'analyseur logique.

On doit noter que, lorsque le dispositif selon l'invention est utilisé comme dispositif de prototypage, l'utilisateur (designer) vient exciter toutes les fonctions des modules périphériques, alors que, lorsque le dispositif est utilisé comme plate-forme de développement, l'utilisateur (informaticien) exécute le logiciel pour tester ses algorithmes, l'interaction entre le logiciel et le circuit intégré et les performances du logiciel.

Puis on passe à l'étape suivante consistant à la configuration du module d'interconnexion d'entrée/sortie (80) de façon à obtenir les connexions de sortie identiques à celles du circuit intégré à réaliser. Le test permet de déterminer si le module d'interconnexion d'entrée/sortie est optimisé (82). Si ce n'est pas le cas on effectue à nouveau la configuration du module d'interconnexion d'entrée/sortie avec les paramètres corrigés à la suite du test.

Lorsque le module d'interconnexion d'entrée/sortie est optimisé, le dispositif de reproduction fonctionnelle est connecté à la carte d'application (84). Puis les tests de la carte et du code de l'application sont effectués (86) avant d'entreprendre la fabrication du circuit intégré spécifique (88). On doit noter que cette fabrication peut être entreprise plus en amont, par exemple après l'optimisation de la configuration.

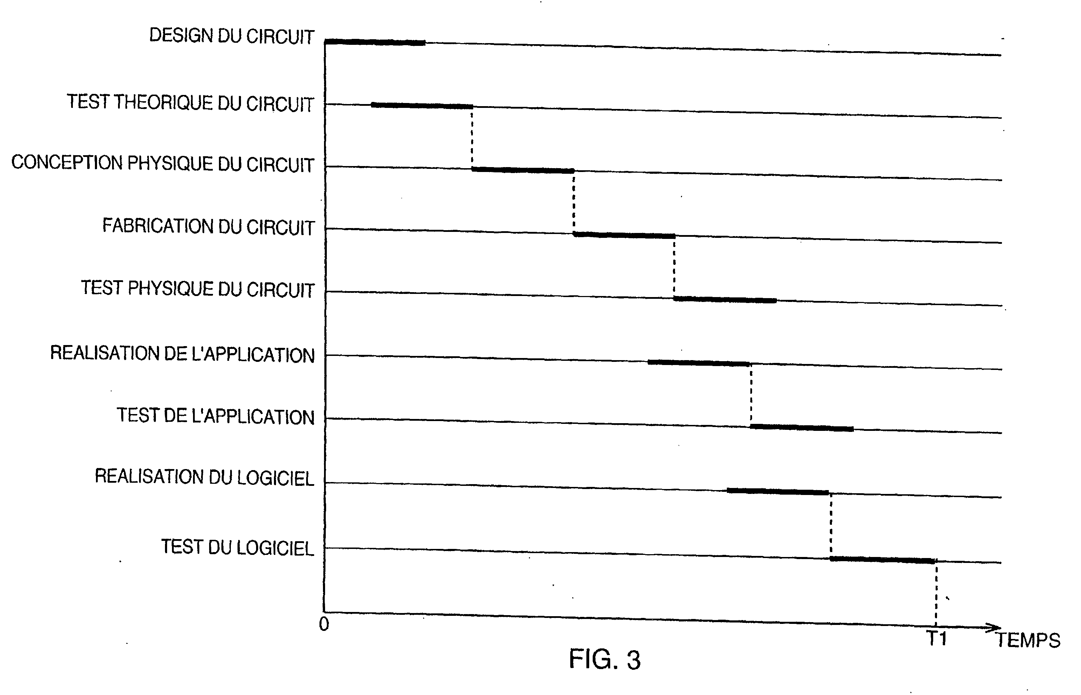

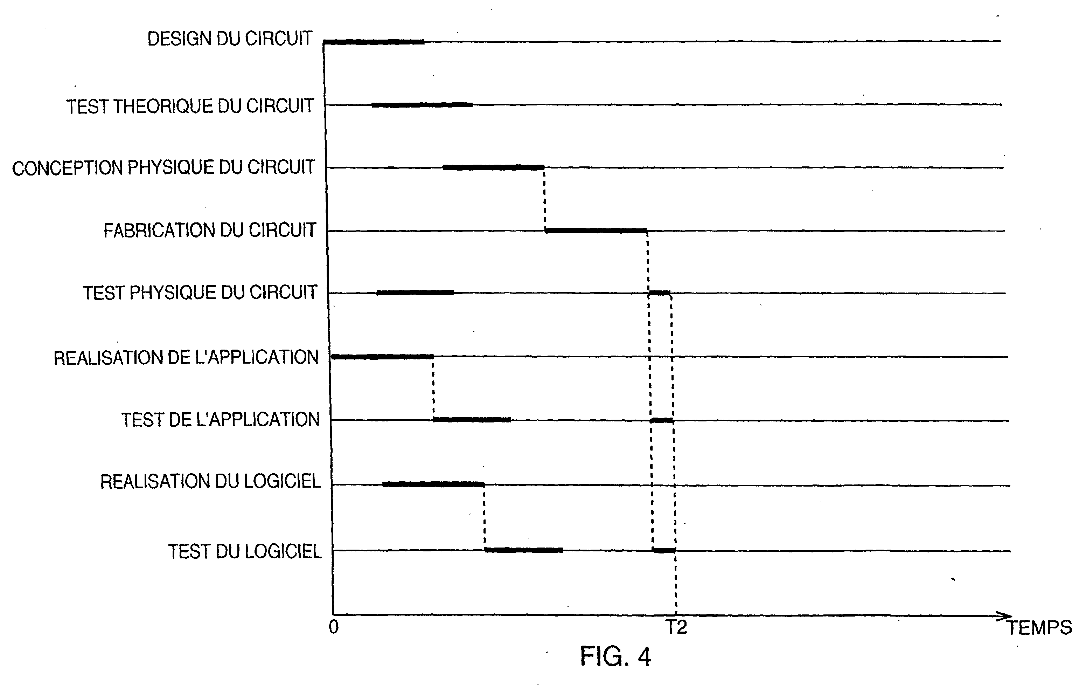

Comme illustré sur la figure 3, la méthode classique de réalisation exige que l'application soit testée lorsque le circuit intégré est opérationnel, c'est à dire après sa fabrication. La réalisation de l'application ne débute donc que très tard dans l'ensemble du processus. Il en est de même pour le logiciel dont la réalisation se situe en fin de processus. Grâce à l'utilisation du dispositif de reproduction fonctionnelle selon l'invention, la durée du processus d'élaboration de la carte d'application est considérablement réduite. En effet, comme illustré sur la figure 4, la réalisation de l'application peut alors débuter après en même temps que la conception du circuit intégré sans attendre sa fabrication puisque le test de l'application peut débuter après la conception du circuit intégré et sa reproduction fonctionnelle par le dispositif de l'invention. Il en est de même pour le logiciel. Des tests de qualification sont toutefois nécessaires comme le montre la figure 4, après la fabrication du circuit intégré. Si la fin du processus d'élaboration se situe à un temps T₁ avec la méthode classique, la fin du même processus se situe au temps T₂ en utilisant le dispositif selon l'invention, temps T₂ qui est inférieur de plus de 40% au temps T₁.

## Revendications

1. Dispositif de reproduction fonctionnelle en temps réel (10) d'un circuit intégré spécifique composé d'une unité de traitement et des périphériques pour effectuer des fonctions spécifiques numériques et/ou analogiques sous la commande d'un logiciel spécifique, ledit circuit intégré spécifique étant destiné à être incorporé dans une carte d'application déterminée ; ledit dispositif étant **caractérisé en ce qu'**il comprend :
un module de traitement (12) fonctionnellement identique à ladite unité de traitement dudit circuit intégré spécifique,
une pluralité de modules périphériques (14, 16, 18) pouvant chacun implémenter une ou plusieurs fonctions numériques et/ou analogiques, chacune desdites fonctions pouvant être sélectionnée séparément,
un module d'interconnexion de fonctions (20) pour établir les connexions entre ledit module de traitement (12) et une ou plusieurs fonctions numériques et/ou analogiques préalablement sélectionnées se trouvant dans au moins un desdits modules périphériques (14, 16, 18), lesdites fonctions étant identiques auxdites fonctions spécifiques dudit circuit intégré spécifique, de sorte que ledit dispositif de reproduction se comporte de façon identique audit circuit intégré spécifique lorsque ledit logiciel spécifique est exécuté,
dans lequel ledit module d'interconnexion de fonctions (20) est connecté audit module de traitement (12) par un bus dit interne (28) regroupant les liaisons internes dudit circuit intégré spécifique entre son unité de traitement et ses périphériques.

2. Dispositif selon la revendication 1, dans lequel lesdits modules périphériques comprennent un ou plusieurs circuits intégrés (14, 16) spécialement conçus pour implémenter chacun une pluralité de fonctions numériques et/ou analogiques.

3. Dispositif selon la revendication 2, dans lequel lesdits modules périphériques comprennent également un ou plusieurs réseaux logiques programmables du type FPGA (18) qui ont été préalablement programmés pour pouvoir implémenter au moins une fonction numérique préalablement sélectionnée et qui ne peut pas être implémentée par lesdits circuits intégrés (14, 16) spécialement conçus pour implémenter les fonctions numériques et/ou analogiques.

4. Dispositif selon l'une des revendications 1 à 3, dans lequel ledit module d'interconnexion de fonctions (20) est configuré par un automate programmable (44) au moyen d'un logiciel élaboré lorsque lesdites fonctions numériques et/ou analogiques devant être implémentées par lesdits modules périphériques (14, 16, 18) ont été sélectionnées.

5. Dispositif selon la revendication 4, comprenant en outre un module d'interconnexion d'entrée/sortie (22) et une interface (24) connectée audit module d'interconnexion d'entrée/sortie par un bus d'entrée/sortie (34) et pouvant être connectée aux broches d'entrée/sortie du circuit intégré spécifique dans la carte d'application déterminée, , ledit module d'interconnexion d'entrée/sortie établissant les connexions entre les sorties des fonctions numériques et/ou analogiques préalablement sélectionnées desdits modules périphériques (14, 16, 18) et ladite interface.

6. Dispositif selon la revendication 4 ou 5, dans lequel ledit module d'interconnexion d'entrée/sortie (22) est configuré par ledit automate programmable (44) au moyen dudit logiciel élaboré lorsque lesdites fonctions numériques et/ou analogiques ont été sélectionnées.

7. Dispositif selon l'une des revendications 1 à 6, comprenant en outre un module d'émulation ROM (45) connecté directement audit module de traitement (12) pour émuler la mémoire ROM dudit circuit intégré spécifique, ledit module d'émulation ROM étant de préférence une mémoire SSRAM ayant le même type d'accès et le même temps d'accès que ladite mémoire ROM.

8. Dispositif selon la revendication 7, utilisé comme dispositif d'émulation dudit circuit intégré spécifique lorsque ladite interface (24) est connectée par exemple à l'aide d'une nappe (36), aux broches d'entrée/sortie dudit circuit intégré spécifique (27) destiné à être incorporé dans ladite carte d'application déterminée (26).

9. Dispositif selon l'une des revendications 1 à 4, utilisé comme dispositif de prototypage pour implémenter un prototype dudit circuit intégré spécifique (27) destiné à être incorporé dans ladite carte d'application déterminée (26).

10. Dispositif selon l'une des revendications 1 à 4, utilisé comme plate-forme de développement dudit circuit intégré spécifique (27) destiné à être incorporé dans ladite carte d'application déterminée (26).

## Claims

1. A real time functional replicator (10) of a specific integrated circuit comprised of a processing unit and peripherals in order to perform specific digital and/or analog functions controlled by specific software, said specific integrated circuit being designed to be incorporated into a specified application board; said device being **characterized in that** it includes:
a processing module (12) that is functionally identical to said processing unit of said specific integrated circuit,
a plurality of peripheral modules (14, 16, 18) each able to implement one or more digital and/or analog functions, each of said functions being able to be selected separately,
a function interconnection module (20) for establishing the connections between said processing module (12) and one ore more digital and/or analog functions previously selected and located in at least one of said peripheral modules (14, 16, 18), said functions being identical to said specific functions of said specific integrated circuit, such that said replicator behaves identically to said specific integrated circuit when said specific software is run, wherein said function interconnection module (20) is connected to said processing module (12) through a so-called internal bus (28) grouping together the internal connections of said specific integrated circuit between its processing unit and its peripherals.

2. The device according to claim 1, in which said peripheral modules feature one or more integrated circuits (14, 16) each of which are specially designed to implement a plurality of digital and/or analog functions.

3. The device according to claim 2, in which said peripheral modules also include one or more FPGA type programmable logic arrays (18) which were previously programmed to implement at least one digital function which is not implemented by said integrated circuits (14, 16) specially designed to implement the digital and/or analog functions. module (20)

4. The device according to any one of claims 1 to 3, in which said function interconnection module (20) is configured by a programmable automaton (44) using software set up when said digital and/or analog functions, which must be implemented by said peripheral modules (14, 16, 18), have been selected.

5. The device according to claim 4, featuring an input/output connection module (22) and an interface (24) connected to said input/output interconnection module by an input/output bus (34) and which can be connected to the input/output pins of the specific integrated circuit in the specified application board, said input/output interconnection module establishing the connections between the outputs of the digital and/or analog functions previously selected of said peripheral modules (14, 16, 18) and said interface.

6. The device according to claim 4 or 5, in which said input/output interconnection module (22) is configured by said programmable automaton (44) by means of said software set up when said digital and/or analog functions were selected.

7. The device according to any one of claims 1 to 6, further including a ROM emulation module (45) connected directly to said processing module (12) to emulate the ROM memory of said specific integrated circuit, said ROM emulation module preferably being a SSRAM memory, having the same type of access and the same access time as said ROM memory.

8. The device according to claim 7, used as an emulation device of said specific integrated circuit when said interface (24) is connected, for example, using a ribbon cable (36), to the input/output pins of said specific integrated circuit (27) designed to be built into said specified application board (26).

9. The device according to any one of claims I to 4, used as a prototyping device to implement a prototype of said specific integrated circuit (27) designed to be built into said specific application board (26).

10. The device according to any one of claims I to 4, used as a development platform for said specific integrated circuit (27) designed to be built into said specified application board (26).

## Patentansprüche

1. Vorrichtung (10) zur funktionellen Reproduktion in Echtzeit einer spezifischen integrierten Schaltung, die aus einer Verarbeitungseinheit und Peripherieelementen zur Durchführung von spezifischen digitalen und/oder analogen Funktionen unter der Steuerung durch eine spezifische Software besteht, wobei diese spezifische integrierte Schaltung dazu bestimmt ist, in eine bestimmte Anwendungskarte eingegliedert zu werden, wobei diese Vorrichtung **dadurch gekennzeichnet ist, daß** sie folgendes umfaßt:
- ein Verarbeitungsmodul (12), das mit der Verarbeitungseinheit der spezifischen integrierten Schaltung identisch ist,
- eine Vielzahl von Peripheriemodulen (14, 16, 18), die jeweils eine oder mehrere digitale und/oder analoge Funktionen implementieren können, wobei jede dieser Funktionen getrennt gewählt werden kann,
- ein Funktionsanschlußmodul (20) zum Herstellen der Verbindungen zwischen dem Verarbeitungsmodul (12) und einer oder mehreren zuvor gewählten digitalen und/oder analogen Funktionen, die sich in mindestens einem der Peripheriemodule (14, 16, 18) befinden, wobei diese Funktionen mit den spezifischen Funktionen der spezifischen integrierten Schaltung identisch sind, so daß die Reproduktionsvorrichtung sich auf mit der spezifischen integrierten Schaltung identische Weise verhält, wenn die spezifische Software ausgeführt wird,
wobei in dieser Vorrichtung das Funktionsanschlußmodul (20) mit dem Verarbeitungsmodul (12) durch einen sogenannten internen Bus (28) verbunden ist, der die internen Verbindungen der spezifischen integrierten Schaltung zwischen ihrer Verarbeitungseinheit und ihren Peripherieelementen zusammenfaßt.

2. Vorrichtung nach Anspruch 1, bei der die Peripheriemodule einen oder mehrere integrierte Schaltungen (14, 16) umfassen, die speziell dafür ausgelegt sind, jeweils eine Vielzahl von digitalen und/oder analogen Funktionen zu implementieren.

3. Vorrichtung nach Anspruch 2, bei der die Peripheriemodule ferner ein oder mehrere programmierbare logische Netzwerke vom Typ FPGA (18) umfassen, die zuvor programmiert wurden, um mindestens eine zuvor gewählte digitale Funktion implementieren zu können, die nicht durch die integrierten Schaltungen (14, 16) implementiert werden kann, die speziell dafür ausgelegt sind, die digitalen und/oder analogen Funktionen zu implementieren.

4. Vorrichtung nach einem der Ansprüche 1 bis 3, bei der das Funktionsanschlußmodul (20) durch einen programmierbaren Automaten (44) mit Hilfe einer Software konfiguriert wird, die erstellt wird, wenn die digitalen und/oder analogen Funktionen, die durch die Peripheriemodule (14, 16, 18) implementiert werden müssen, gewählt wurden.

5. Vorrichtung nach Anspruch 4, umfassend ferner ein Eingangs/Ausgangs-Anschlußmodul (22) und eine Schnittstelle (24), die mit dem Eingangs/Ausgangs-Anschlußmodul durch einen Eingangs/Ausgangs-Bus (34) verbunden ist und mit den Eingangs/Ausgangs-Stiften der spezifischen integrierten Schaltung in der bestimmten Anwendungskarte verbunden werden kann, wobei das Eingangs/Ausgangs-Anschlußmodul die Verbindungen zwischen den Ausgängen der zuvor gewählten digitalen und/oder analogen Funktionen der Peripheriemodule (14, 16, 18) und der Schnittstelle herstellt.

6. Vorrichtung nach Anspruch 4 oder 5, bei der das Eingangs/Ausgangs-Anschlußmodul (22) durch den programmierbaren Automaten (44) mit Hilfe der Software konfiguriert wird, die erstellt wird, wenn die digitalen und/oder analogen Funktionen gewählt wurden.

7. Vorrichtung nach einem der Ansprüche 1 bis 6, umfassend ferner ein ROM-Emulationsmodul (45), das direkt mit dem Verarbeitungsmodul (12) verbunden ist, um den ROM-Speicher der spezifischen integrierten Schaltung zu emulieren, wobei das ROM-Emulationsmodul vorzugsweise ein SSRAM-Speicher mit demselben Zugriffstyp und derselben Zugriffszeit wie dieser ROM-Speicher ist.

8. Vorrichtung nach Anspruch 7, die als Vorrichtung zur Emulation der spezifischen integrierten Schaltung verwendet wird, wenn die Schnittstelle (24) beispielsweise mit Hilfe einer Bahn (36) an die Eingangs/Ausgangs-Stifte dieser spezifischen integrierten Schaltung (27) angeschlossen ist, die dazu bestimmt ist, in die bestimmte Anwendungskarte (26) eingegliedert zu werden.

9. Vorrichtung nach einem der Ansprüche 1 bis 4, die als Prototypisierungsvorrichtung verwendet wird, um einen Prototyp der spezifischen integrierten Schaltung (27) zu implementieren, die dazu bestimmt ist, in die bestimmte Anwendungskarte (26) eingegliedert zu werden.

10. Vorrichtung nach einem der Ansprüche 1 bis 4, die als Plattform zur Entwicklung dieser spezifischen integrierten Schaltung (27) verwendet wird, die dazu bestimmt ist, in die bestimmte Anwendungskarte (26) eingegliedert zu werden.
